# FASCICULE DE BREVET EUROPEEN

(11) **EP 0 996 078 B1**
(45) Date de publication et mention de la délivrance du brevet: **08.08.2007**
(21) Numéro de dépôt: 99402504.7
(22) Date de dépôt: 12.10.1999
(51) Int. Cl.: G06K 7/10

(54) **Lecteur de symbole pour le relevé d'un quelconque symbole sur un quelconque objet**
Symbolabtaster zum Lesen von einem Symbol auf einem Gegenstand
Symbol reader for reading a symbol on an object

(30) Priorité: 15.10.1998 FR 9812922
(43) Date de publication de la demande: 26.04.2000
(73) Titulaire: ESSILOR INTERNATIONAL (Compagnie Générale d'Optique), F-94220 Charenton-le-Pont (FR)
(72) Inventeur: Sabourault, Sébastien, 55500 Ligny en Barrois (FR)
(74) Mandataire: Santarelli

(56) Documents cités:
- EP-A- 0 729 025
- WO-A-98/18098
- FR-A- 2 758 754
- US-A- 5 291 009

## Description

Dans la demande de brevet français, qui a été déposée le 28 janvier 1997 sous le No 97 00873, et qui a été publiée sous le No 2 758 754, il est proposé un procédé pour le marquage d'un objet en matière translucide, ainsi qu'un lecteur de symbole pour le relevé du symbole, ou code, résultant d'un tel marquage.

En pratique, ce lecteur de symbole met globalement en oeuvre, d'une part, d'un côté de l'objet concerné, un dispositif d'éclairage comportant une pluralité de sources lumineuses, et, d'autre part, de l'autre côté de cet objet, une caméra CCD, en sorte que, suivant une originalité de ce lecteur de symbole, l'éclairage de l'objet concerné intervient par transparence, et non pas par réflexion.

En pratique, également, il est plus particulièrement envisagé, dans cette demande de brevet français No 97 00873, une application de ce lecteur de symbole à la lecture d'un symbole sur une lentille ophtalmique en matière synthétique ou sur une coquille de moulage propre au moulage d'une telle lentille ophtalmique.

Lors du développement du processus correspondant, il est apparu qu'il était intéressant de pouvoir également appliquer ce lecteur de symbole à la lecture d'un symbole sur un ensemble de deux coquilles de moulage enserrant encore entre elles la lentille ophtalmique qu'elles ont eu à charge de mouler, pour pouvoir ainsi suivre à la trace cet ensemble avant même le démoulage de cette lentille ophtalmique, étant entendu, cependant, qu'il peut être tout aussi intéressant de pouvoir également procéder à la lecture de ce symbole avant même le moulage de cette lentille ophtalmique, lorsque la cavité de moulage formée par les deux coquilles de moulage est encore vide.

En pratique, les deux coquilles de moulage comportent chacune leur propre symbole, mais, ces deux coquilles de moulage se rapportant à une même lentille ophtalmique, il suffit de relever le symbole de l'une pour connaître le symbole de l'autre.

Bien entendu, pour des raisons de précision, on choisit de relever le symbole de celle de ces coquilles de moulage qui est la plus proche de la caméra CCD.

Mais, le dispositif d'éclairage intervenant par transparence, la difficulté, en l'espèce, tient à ce que le symbole de la coquille de moulage la plus proche du dispositif d'éclairage, qui est celle la plus éloignée de la caméra CCD, risque de perturber le relevé pratiqué, en raison, notamment, de l'ombre portée dont il est normalement inévitablement à l'origine sur le symbole lu.

La présente invention a d'une manière générale pour objet une disposition permettant de surmonter de manière simple et efficace cette difficulté.

De manière plus précise, elle a pour objet un lecteur de symbole du genre mettant en oeuvre, d'un côté de l'objet portant un symbole à relever, un dispositif d'éclairage comportant une pluralité de sources lumineuses, et, de l'autre côté de cet objet, une caméra CCD, ce lecteur de symbole étant d'une manière générale caractérisé en ce que, conjointement, d'une part, les sources lumineuses du dispositif d'éclairage sont disposées circulairement suivant au moins une circonférence autour de l'axe optique de l'ensemble, et, d'autre part, ces sources lumineuses sont chacune inclinées sur cet axe optique, leur axe d'émission se rapprochant de celui-ci du côté de la caméra CCD.

Grâce à cette disposition, il est possible d'éclairer le symbole de la coquille de moulage la plus éloignée du dispositif d'éclairage sans éclairer le symbole de la coquille de moulage la plus proche de celui-ci, en contournant tout simplement ce dernier symbole.

Certes, dans les brevets américains Nos 5 291 009 et 5 354 977, il est proposé, s'agissant de la lecture d'un code barre par une caméra CCD, de mettre en oeuvre un dispositif d'éclairage dont les sources lumineuses sont chacune inclinées sur l'axe optique de l'ensemble.

Mais, ces sources lumineuses se développent alors naturellement dans un plan, sans être disposées sur une quelconque circonférence.

Dans la demande de brevet internationale No WO98/18098, les sources lumineuses du dispositif d'éclairage mis en oeuvre sont, au moins pour certaines, disposées suivant une circonférence.

Mais leur axe d'émission s'étend alors parallèlement à l'axe optique de l'ensemble.

En outre, dans l'un et l'autre cas, le dispositif d'éclairage mis en oeuvre intervient par réflexion, et non pas par transparence.

Il n'en est pas de même dans le lecteur de symbole suivant l'invention.

Les caractéristiques et avantages de l'invention ressortiront d'ailleurs de la description qui va suivre, à titre d'exemple, en référence aux dessins schématiques annexés sur lesquels :
la figure 1 est une vue en coupe axiale d'un lecteur de symbole suivant l'invention et de l'objet sur lequel il a à charge de lire un symbole ;
la figure 2 reprend, à échelle supérieure, le détail de la figure 1 repéré par un encart II sur cette figure 1.

Ces figures illustrent, à titre d'exemple, l'application de l'invention au cas où l'objet 10 à traiter est l'ensemble que constituent deux coquilles de moulage A, 11 B, l'une concave, l'autre convexe, lorsqu'elles enserrent encore une lentille ophtalmique 12 qu'elles ont eu à charge de mouler.

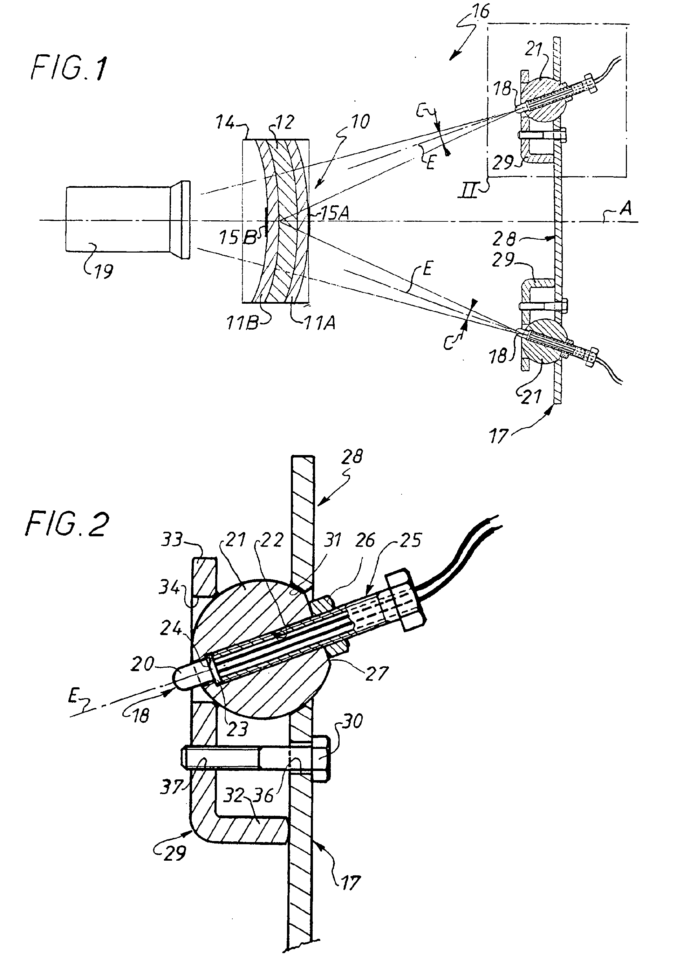

Le plus souvent, et tel que représenté sur la figure 1, la cohésion mécanique de l'objet 10 ainsi constitué par un tel ensemble est assurée par un manchon 14, qui entoure cet ensemble, et qui est par exemple formé par un simple ruban enroulé sur lui-même.

Chacune des coquilles de moulage A, 11 B portent, dans sa zone centrale, un symbole 15A, 15B, qui constitue en pratique un code propre à leur identification, et qui, à la manière d'une matrice, est par exemple formé d'un réseau quadrillé de cellules gravées et de cellules non gravées, suivant des dispositions décrites dans la demande de brevet No 97 00873 déjà mentionnée ci-dessus.

En pratique, ce symbole 15A, 15B affecte la surface externe des coquilles de moulage 11A, 11B, c'est-à-dire la surface de celles-ci opposée à celle par laquelle elles sont au contact de la lentille ophtalmique 12.

Il s'agit, donc, plus précisément, de la surface convexe pour la coquille de moulage 11A concave, et de la surface concave pour la coquille de moulage 11B convexe.

Bien entendu, affectant des coquilles de moulage 1 A, 11 B mises en oeuvre pour la réalisation d'une même lentille ophtalmique 12, les symboles 15A, 15B ont un lien entre eux, en sorte que la connaissance de l'un permet de connaître l'autre.

Il suffit, donc, d'assurer le relevé d'un seul de ces symboles 15A, 15B.

Pour ce relevé, il est mis en oeuvre un lecteur de symbole 16.

Suivant les dispositions décrites dans la demande de brevet français No 97 00873 déjà mentionnée ci-dessus, ce lecteur de symbole 16 met en oeuvre, globalement, d'une part, d'un côté de l'objet 10 concerné, un dispositif d'éclairage 17 comportant une pluralité de sources lumineuses 18, et, d'autre part, de l'autre côté de cet objet 10, une caméra CCD 19.

Lorsque, comme en l'espèce, les symboles 15A, 15B interviennent dans la zone centrale de l'objet 10 concerné, la caméra CCD 19 est alignée avec cette zone centrale, suivant un axe optique A qui est ainsi commun à l'ensemble.

Dans la forme de mise en oeuvre représentée à titre d'exemple, cette caméra CCD 19 est disposée du côté de l'objet 10 correspondant à la coquille de moulage 11 B convexe, pour assurer le relevé, c'est-à-dire la lecture, du seul symbole 15B de cette dernière.

Il importe donc que le symbole 15A de la coquille de moulage 11 A concave ne perturbe pas ce relevé.

Pour ce faire, suivant l'invention, et conjointement, d'une part, les sources lumineuses 18 du dispositif d'éclairage 17 sont disposées circulairement suivant au moins une circonférence autour de l'axe optique A de l'ensemble, et, d'autre part, ces sources lumineuses 18 sont chacune inclinées sur cet axe optique A, leur axe d'émission E se rapprochant de celui-ci du côté de la caméra CCD 19.

Préférentiellement, et cela est le cas dans la forme de réalisation représentée, les sources lumineuses 18 du dispositif d'éclairage 17 ont chacune individuellement un cône d'émission C réduit.

Par cône d'émission C des sources lumineuses 18, on entend ici le cône qui, centré sur leur axe d'émission E, en forme le cône de sortie.

En pratique, ce cône d'émission C est dûment calibré.

Il est par exemple inférieur à 20°.

Dans la forme de mise en oeuvre représentée, les sources lumineuses 18 du dispositif d'éclairage 17 sont toutes disposées circulairement suivant une même circonférence autour de l'axe optique A de l'ensemble.

Par exemple, il s'agit de simples diodes électroluminescentes, communément appelées LED.

Préférentiellement, l'enveloppe extérieure 20, en verre ou autre, que présente chacune de ces sources lumineuses 18 est dépolie, afin que soit ainsi obtenue une lumière relativement diffuse et d'intensité homogène de nature à accentuer le contraste au niveau du relevé effectué.

Préférentiellement, également, les sources lumineuses 18 du dispositif d'éclairage 17 sont chacune individuellement montées de manière réglable en inclinaison par rapport à l'axe optique A de l'ensemble.

Par exemple, et tel que représenté, ces sources lumineuses 18 sont chacune individuellement portées par une rotule 21, c'est-à-dire par une pièce sphérique.

Dans la forme de réalisation représentée, et ainsi qu'il est mieux visible sur la figure 2, cette rotule 21 comporte, suivant un diamètre, un alésage 22 à la faveur duquel est logée la source lumineuse 18 correspondante, cette source lumineuse 18 prenant appui par sa semelle 23 contre un épaulement transversal 24 interne à cet alésage 22, et faisant saillie à l'extérieur par le bout, au moins, de son enveloppe extérieure 20 à l'extrémité correspondante de celui-ci.

Par exemple, et tel que représenté, le maintien de la source lumineuse 18 dans la rotule 21 peut être assuré par une vis tubulaire 25, qui est en prise avec l'alésage 22 de cette rotule 21, cet alésage 22 étant dûment taraudé à cet effet, et dont le blocage est assuré par un contre-écrou 26 venant porter sur un méplat 27 prévu à cet effet sur la rotule 21 autour de l'alésage 22 au débouché de celui-ci.

Mais d'autres modes de montage sont bien entendu envisageables.

Dans la forme de réalisation représentée, les diverses rotules 21 portant les sources lumineuses 18 du dispositif d'éclairage 17 sont chacune individuellement montées rotatives dans tous les sens entre une embase 28, qui est commune à toutes, et une bride 29, qui est propre à chacune d'elles, et qui est attelée à l'embase 28 par des moyens de serrage 30.

Par exemple, et tel que représenté, l'embase 28 se présente sous la forme d'un disque de contour circulaire.

Pour chacune des rotules 21, elle comporte un évidement 31, dont la surface d'appui correspondante est globalement tronconique.

Corollairement, la bride 29 prévue pour chacune des rotules 21 se présente, par exemple, et tel que représenté, sous la forme générale d'une équerre, en prenant appui, par une aile 32, sur l'embase 28, et en portant, par une aile 33, sur la rotule 21, à la faveur d'un évidement 34 dont la surface d'appui sur cette rotule 21 est elle aussi plus ou moins globalement tronconique.

Dans la forme de réalisation représentée, les moyens de serrage 30 associés sont constitués par une vis, qui porte, par sa tête, sur l'embase 28, et qui, après la traversée de celle-ci à la faveur d'un perçage lisse 36, est en prise à vissage avec un perçage taraudé 37 de l'aile 33 de la bride 29.

Il résulte de ce qui précède que toutes les sources lumineuses 18 du dispositif d'éclairage 17 sont disposées à une même distance de l'axe optique A de l'ensemble.

Par construction, il est fait en sorte que, eu égard à cette distance et à la distance qui sépare par ailleurs globalement le dispositif d'éclairage 17 de l'objet 10 concerné, le cône d'émission C des sources lumineuses 18 de ce dispositif d'éclairage 17 s'étende tout entier à l'écart du symbole 15A de la coquille de moulage 11 A de cet objet 10 la plus proche de ce dispositif d'éclairage 17, en affleurant, au mieux, ce symbole 15A, comme représenté sur la figure 1.

Ainsi, les cônes d'émission C des diverses sources lumineuses 18 du dispositif d'éclairage 17 ne font en quelque sorte que contourner ce symbole 15A, sans éclairer ce symbole 15A, et sans donc que ce symbole 15A soit à l'origine d'une quelconque ombre portée sur le symbole 15B situé du côté de la caméra CCD 19 et relevé par celle-ci.

Par exemple, afin de s'affranchir, dans un cadre industriel, des perturbations venant de l'éclairage environnant, le nombre de sources lumineuses 18 que comporte le dispositif d'éclairage 17 du lecteur de symbole 16 suivant l'invention est supérieur à dix, en étant préférentiellement au moins de l'ordre de douze, et les rotules 21 qui les portent sont en résine synthétique, tandis que l'embase 28 et les brides 29 qui enserrent ces rotules 21 sont en métal.

Bien entendu, la présente invention ne se limite pas à la forme de réalisation décrite et représentée, mais englobe toute variante d'exécution.

Son domaine d'application n'est pas non plus limité à celui des seuls ensembles, à coquilles de moulage avec ou sans lentille ophtalmique, plus particulièrement envisagé.

Ce domaine d'application s'étend au contraire, d'une manière plus générale, au relevé d'un quelconque symbole sur un quelconque objet.

## Revendications

1. Lecteur de symbole pour le relevé d'un quelconque symbole (15A, 15B) sur un quelconque objet (10), du genre mettant en oeuvre, d'un côté de cet objet (10), un dispositif d'éclairage (17) comportant une pluralité de sources lumineuses (18), et, de l'autre côté de cet objet 10, une caméra CCD (19), **caractérisé en ce que**, conjointement, d'une part, les sources lumineuses (18) du dispositif d'éclairage (17) sont disposées circulairement suivant au moins une circonférence autour de l'axe optique (A) de l'ensemble, et, d'autre part, ces sources lumineuses (18) sont chacune inclinées sur cet axe optique (A), leur axe d'émission (E) se rapprochant de celui-ci du côté de la caméra CCD (19).

2. Lecteur de symbole suivant la revendication 1, **caractérisé en ce que** les sources lumineuses (18) du dispositif d'éclairage (17) sont toutes disposées circulairement suivant une même circonférence autour de l'axe optique (A) de l'ensemble.

3. Lecteur de symbole suivant l'une quelconque des revendications 1, 2, **caractérisé en ce que** les sources lumineuses (18) du dispositif d'éclairage (17) ont chacune individuellement un cône d'émission (C) réduit.

4. Lecteur de symbole suivant la revendication 3, **caractérisé en ce que** le cône d'émission (C) des sources lumineuses (18) du dispositif d'éclairage (17) est inférieur à 20°.

5. Lecteur de symbole suivant l'une quelconque des revendications 1 à 3, **caractérisé en ce que** les sources lumineuses (18) du dispositif d'éclairage (17) sont chacune individuellement montées de manière réglable en inclinaison par rapport à l'axe optique (A) de l'ensemble.

6. Lecteur de symbole suivant la revendication 5, **caractérisé en ce que** les sources lumineuses (18) du dispositif d'éclairage (17) sont chacune individuellement portées par une rotule (21).

7. Lecteur de symbole suivant la revendication 6, **caractérisé en ce que** les rotules (21) portant les sources lumineuses (18) du dispositif d'éclairage (17) sont chacune individuellement montées rotatives entre une embase (28), qui est commune à toutes, et une bride (29), qui est propre à chacune d'elles, et qui est attelée à l'embase (28) par des moyens de serrage (30).

8. Lecteur de symbole suivant l'une quelconque des revendications 1 à 7, **caractérisé en ce que** l'enveloppe extérieure (20) que présente chacune des sources lumineuses (18) du dispositif d'éclairage (17) est dépolie.

## Claims

1. A symbol reader for reading a symbol (15A, 15B) of any kind on an object (10) of any kind, including an illumination system (17) including a plurality of light sources (18) on one side of said object (10) and a CCD camera (19) on the other side of said object (10), wherein said light sources (18) of said illumination system (17) are disposed on a circle on at least one circumference around an optical axis (A) of the assembly and each light source (18) is inclined to said optical axis (A), having an emission axis (E) converging toward said optical axis on the CCD camera (19) side.

2. The symbol reader according to claim 1, **characterized in that** said light sources (18) of said illumination system (17) are all on a circle on the same circumference around said optical axis (A) of the assembly.

3. The symbol reader according to any of claims 1, 2, **characterized in that** each light source (18) of said illumination system (17) has a small emission cone (C).

4. The symbol reader according to claim 3, **characterized in that** said emission cone (C) of each light source (18) of said illumination system (17) is less than 20°.

5. The symbol reader according to any of claims 1 to 3, **characterized in that** the inclination of each light source (18) of said illumination system (17) relative to said optical axis (A) of said assembly is individually adjustable.

6. The symbol reader according to claim 5, **characterized in that** each light source (18) of said illumination system (17) is individually carried by a ball (21).

7. The symbol reader according to claim 6, **characterized in that** each ball (21) carrying a light source (18) of said illumination system (17) is individually rotatable between a base (28) which is common to all said balls and a clamp (29) which is specific to it and which is coupled to said base (28) by clamping means (30).

8. The symbol reader according to any of claims 1 to 7, **characterized in that** each light source (18) of said illumination system (17) has a frosted external envelope.

## Patentansprüche

1. Symbolabtaster zum Lesen eines beliebigen Symbols (15A, 15B) auf einem beliebigen Gegenstand (10), von der Art, bei der auf einer Seite des Gegenstandes (10) eine Beleuchtungseinrichtung (17), die eine Vielzahl von Lichtquellen (18) umfasst, und auf einer anderen Seite des Gegenstandes (10) eine CCD-Kamera (19) eingesetzt wird, **dadurch gekennzeichnet, dass** zusammen betrachtet die Lichtquellen (18) der Beleuchtungseinrichtung (17) einerseits kreisförmig gemäß zumindest einem Umfang um die optische Achse (A) der Anordnung angeordnet sind, und dass die Lichtquellen (18) andererseits jeweils bezüglich der optischen Achse (A) geneigt sind, wobei sich ihre Emissionsachse (E) dieser zur Seite der CCD-Kamera (19) hin annähern.

2. Symbolabtaster nach Anspruch 1, **dadurch gekennzeichnet, dass** die Lichtquellen (18) der Beleuchtungseinrichtung (17) alle kreisförmig gemäß eines selben Umfangs um die optische Achse (A) der Anordnung angeordnet sind.

3. Symbolabtaster gemäß einem der Ansprüche 1, 2, **dadurch gekennzeichnet, dass** die Lichtquellen (18) der Beleuchtungseinrichtung (17) jede individuell einen reduzierten Emissionspegel (C) haben.

4. Symbolabtaster nach Anspruch 3, **dadurch gekennzeichnet, dass** der Emissionspegel (C) der Lichtquellen (18) der Beleuchtungseinrichtung (17) weniger als 20° ist.

5. Symbolabtaster nach einem der Ansprüche 1 bis 3, **dadurch gekennzeichnet, dass** die Lichtquellen (18) der Beleuchtungseinrichtung (17) jede individuell auf eine neigungseinstellbare Weise bezüglich der optischen Achse (A) der Anordnung montiert sind (ist).

6. Symbolabtaster nach Anspruch 5, **dadurch gekennzeichnet, dass** die Lichtquellen (18) der Beleuchtungseinrichtung (17) jede individuell von einem Kugelgelenk (21) getragen sind (ist).

7. Symbolabtaster nach Anspruch 6, **dadurch gekennzeichnet, dass** die Kugelgelenke (21), die die Lichtquellen (18) der Beleuchtungseinrichtung (17) tragen, jedes individuell zwischen einem Sockel (28), der allen gemein ist, und einer Lasche (29), die jeder von ihnen eigen ist, drehbar montiert sind (ist), und die am Sockel (28) mittels Spannmitteln (30) angebracht ist.

8. Symbolabtaster nach einem der Ansprüche 1 bis 7, **dadurch gekennzeichnet, dass** die äußere Umhüllung (20), die jede der Lichtquellen (18) der Beleuchtungseinrichtung (17) aufweist, matt ist.
